# EUROPEAN PATENT APPLICATION

(11) **EP 2 711 814 A1**
(43) Date of publication of application: **26.03.2014**
(21) Application number: 12785994.0
(22) Date of filing: 16.05.2012
(51) Int. Cl.: G06F 3/041, G06F 3/048

(54) **PORTABLE TERMINAL DEVICE, DISPLAY CONTROL METHOD THEREOF, AND PROGRAM**

(30) Priority: 17.05.2011 JP 2011110025
(71) Applicant: NEC CASIO Mobile Communications, Ltd., Kawasaki-shi Kanagawa 211-8666 (JP)
(72) Inventor: MIZOGUCHI, Naoki, Kawasaki-Shi, Kanagawa 211-8666 (JP)
(74) Representative: Vossius & Partner
(86) International application number: PCT/JP2012/062496
(87) International publication number: WO 2012/157667

(57) **Abstract**

A portable terminal device, comprises: a main body that comprises at least a first surface and a second surface; a display unit that displays display content; a first detection unit that detects, as a first position, a position on the first surface when an object comes into contact with or comes close to the first surface; a second detection unit that detects, as a second position, a position on the second surface when an object comes into contact with or comes close to the second surface; and a display control unit that instructs the display unit to enlarge or reduce the display content based on a detection result obtained by the first detection unit and the second detection unit. The portable terminal device enables enlargement or reduction of display content on a portable terminal device at a desired magnification with one hand.

## Description

### FIELD

### (Reference to Related Application)

The present invention is based upon and claims the benefit of the priority of Japanese Patent Application No. 2011-110025, filed on May 17, 2011, the disclosure of which is incorporated herein in its entirety by reference thereto.

The present invention relates to a portable terminal device, a display control method thereof, and a program. In particular, it relates to: a portable terminal device having a function of enlarging or reducing display content based on a touchpad operation; a display control method of the portable terminal device; and a program.

### BACKGROUND

Recently, portable terminal devices such as mobile phones, navigation devices, PDAs (Personal Digital Assistants) include a touch panel, and by operating such touch panel, display content can be enlarged or reduced. The following techniques are known as methods for enlarging or reducing an image displayed on a portable terminal device.

Patent Literature 1 discloses an image display device that enlarges a displayed image at a predetermined magnification. This image display device detects a position pressed by a finger on a touch panel on a display and enlarges a displayed image with the position as the center.

In addition, Patent Literature 2 discloses a method for enlarging an image at a specified magnification. In this method, a touch sensor arranged at a position different from a display is used. Based on a tap detected by the touch sensor, an image is enlarged at a specified magnification with the center point of a displayed image as the center.

In addition, Patent Literature 3 discloses a method for enlarging/reducing a map displayed on a touch panel by linearly moving two fingers that are into contact with the touch panel on the touch panel.

In addition, Patent Literature 4 discloses an information processing apparatus including a touch panel on a front surface and a touchpad on a back surface. The information processing apparatus is configured so that a user can select identification information by performing a tap operation on the front surface and can select information by performing a drag operation on the back surface.

### CITATION LIST

### PATENT LITERATURE

[Patent Literature 1]
   Japanese Patent Kokai Publication No. JP-H 05-181636A
[Patent Literature 2]
   Japanese Patent Kokai Publication No. JP2010-244240A
[Patent Literature 3]
   Japanese Patent Kokai Publication No. JP2007-279638A
[Patent Literature 4]
   Japanese Patent Kokai Publication No. JP2010-108061A

### SUMMARY

### TECHNICAL PROBLEM

The following analysis has been made by the present inventor.

According to the methods disclosed in Patent Literatures 1 and 2, a user can enlarge/reduce display content on a portable terminal device with one hand. However, since the enlargement/reduction is performed at a predetermined magnification, continuous enlargement/reduction using displayed content as a mark cannot be performed. Namely, according to the techniques disclosed in these literatures, enlarged/reduced content may not be displayed at a magnification desired by the user.

According to the method disclosed in Patent Literature 3, by increasing/decreasing the distance between the two fingers on the touch panel, display content is enlarged/reduced. However, to apply the method disclosed in Patent Literature 3 to a portable terminal device, the portable terminal device needs to be operated with both hands. Namely, the portable terminal device cannot be operated easily with one hand, counted as a problem.

The information processing apparatus disclosed in Patent Literature 4 is for scrolling an information group displayed on a touch panel. Thus, Patent Literature 4 does not disclose a technique relating to enlarging/reducing display content on a portable terminal device.

Thus, there is a problem to be solved. Namely, it is necessary to realize enlargement/reduction of display content on a portable terminal device at a desired magnification with one hand. An object of the present invention is to provide a portable terminal device, a display control method thereof, and a program that solve the problem.

### SOLUTION TO PROBLEM

According to a first aspect of the present invention, there is provided a portable terminal device, comprising: a main body that comprises at least a first surface and a second surface; a display unit that displays display content; a first detection unit that detects, as a first position, a position on the first surface when an object comes into contact with or comes close to the first surface; a second detection unit that detects, as a second position, a position on the second surface when an object comes into contact with or comes close to the second surface; and a display control unit that instructs the display unit to enlarge or reduce the display content based on a detection result(s) obtained by the first detection unit and the second detection unit.

According to a second aspect of the present invention, there is provided a display control method of a portable terminal device that comprises a main body having at least a first surface and a second surface and a display unit displaying display content. The display control method comprises: detecting, as a first position, a position on the first surface when an object comes into contact with or comes close to the first surface; detecting, as a second position, a position on the second surface when an object comes into contact with or comes close to the second surface; and instructing the display unit to enlarge or reduce the display content based on a detection result(s) obtained on the first surface and the second surface.

According to a third aspect of the present invention, there is provided a program for display control of a portable terminal device that comprises a main body having at least a first surface and a second surface and a display unit displaying display content. The program causes a computer provided for the portable terminal to execute: detecting, as a first position, a position on the first surface when an object comes into contact with or comes close to the first surface; detecting, as a second position, a position on the second surface when an object comes into contact with or comes close to the second surface; and instructing the display unit to enlarge or reduce the display content based on a detection result(s) obtained on the first surface and the second surface.

### ADVANTAGEOUS EFFECTS OF INVENTION

The portable terminal device, the control method thereof, and the program according to the present invention can realize enlargement/reduction of display content on a portable terminal device at a desired magnification with one hand.

### BRIEF DESCRIPTION OF DRAWINGS

Fig. 1 is a block diagram schematically illustrating a configuration of a portable terminal device according to the present invention.
Fig. 2 is a block diagram illustrating a configuration of a portable terminal device according to an exemplary embodiment.
Fig. 3 illustrates a schematic perspective view of the portable terminal device according to the exemplary embodiment.
Fig. 4 is a flow chart illustrating an operation of the portable terminal device according to the exemplary embodiment.
Fig. 5 is a flow chart illustrating enlargement/reduction mode determination processing of the portable terminal device according to the exemplary embodiment.
Fig. 6 is a flow chart illustrating enlargement/reduction mode processing of the portable terminal device according to the exemplary embodiment.
Fig. 7 is a flow chart illustrating enlargement display processing of the portable terminal device according to the exemplary embodiment.
Fig. 8 illustrates the enlargement display processing of the portable terminal device according to the exemplary embodiment.
Fig. 9 is a flow chart illustrating reduction display processing of the portable terminal device according to the exemplary embodiment.
Fig. 10 illustrates the reduction display processing of the portable terminal device according to the exemplary embodiment.

### DESCRIPTION OF EMBODIMENTS

First, an outline of the present invention will be described. In the following outline, the reference characters are merely used as examples to facilitate understanding of the present invention. Thus, the reference characters are not intended to limit the present invention to the illustrated modes.

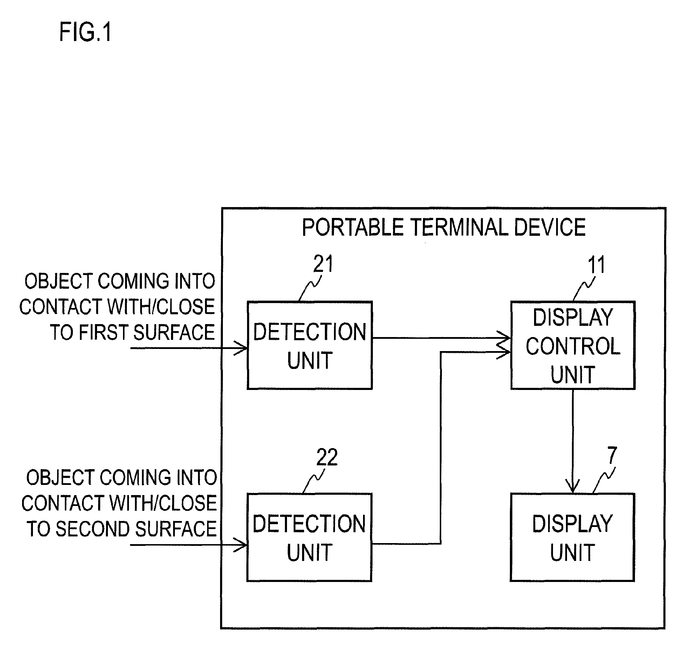

Fig. 1 is a block diagram schematically illustrating a configuration of a portable terminal device according to the present invention. As illustrated in Fig. 1, the portable terminal device comprises: a main body (not illustrated) that comprises at least a first surface and a second surface; a display unit (7) that displays display content; a first detection unit (21) that detects, as a first position, a position on the first surface when an object comes into contact with or comes close to the first surface; a second detection unit (22) that detects, as a second position, a position on the second surface when an object comes into contact with or comes close to the second surface; and a display control unit (11) instructing the display unit (7) to enlarge or reduce the display content based on a detection result(s) obtained by the first detection unit (21) and the second detection unit (22).

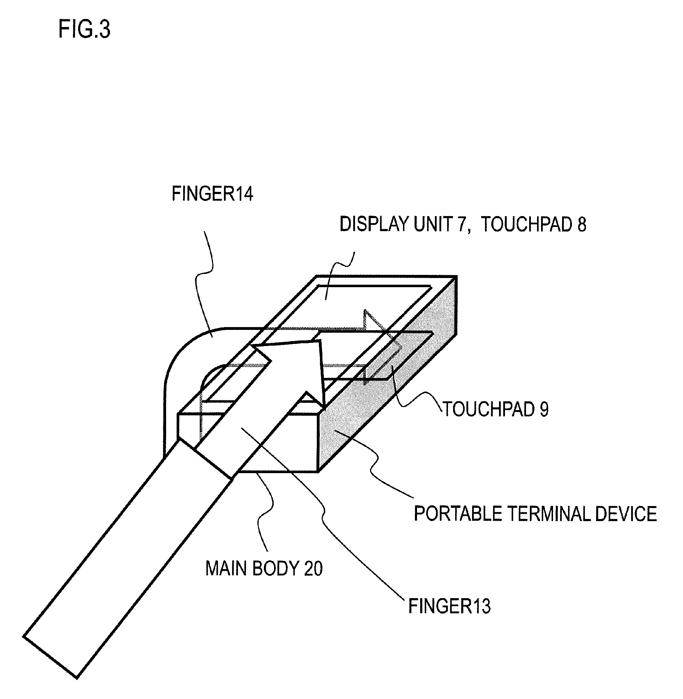

As illustrated in Figs. 1 and 3, the portable terminal device may comprise: a main body (20) that comprises at least a first surface (for example, the top surface of the portable terminal device in Fig. 3) and a second surface (for example, the bottom surface of the portable terminal device in Fig. 3); a display unit (7) that displays display content; a first detection unit (for example, a touchpad 8) that detects, as a first position, a position on the first surface when an object (finger 13) comes into contact with or comes close to the first surface; a second detection unit (for example, a touchpad 9) that detects, as a second position, a position on the second surface when an object (finger 14) comes into contact with or comes close to the second surface; and a display control unit (11) that instructs the display unit (7) to enlarge or reduce the display content based on a detection result(s) obtained by the first detection unit and the second detection unit.

In addition, the display control unit (11) may instruct the display unit (7) to enlarge or reduce the display content, based on a direction and a distance of movement of the first position and/or the second position.

In addition, the display control unit (11) may instruct the display unit (7) to enlarge or reduce the display content by using a point that is included in the display content and that corresponds to the first position and/or the second position as a base point.

As illustrated in Fig. 3, the first detection unit (21) and/or the second detection unit (22) may detect a distance of movement of the first position and/or the second position at least in a first direction (for example, in an x direction) and a second direction (for example, in a y direction), and the display control unit (11) may enlarge or reduce the display content in the first direction (in the x direction) based on the distance of movement in the first direction (in the x direction) and enlarge or reduce the display content in the second direction (in the y direction) based on the distance of movement in the second direction (in the y direction).

In addition, the display control unit (11) may switch to a mode (hereinafter referred to as an enlargement/reduction mode) for enlarging or reducing the display content based on a detection result(s) obtained by the first detection unit (21) and/or the second detection unit (22) and may switch out of the mode based on a detection result(s) obtained by the first detection unit (21) and/or the second detection unit (22).

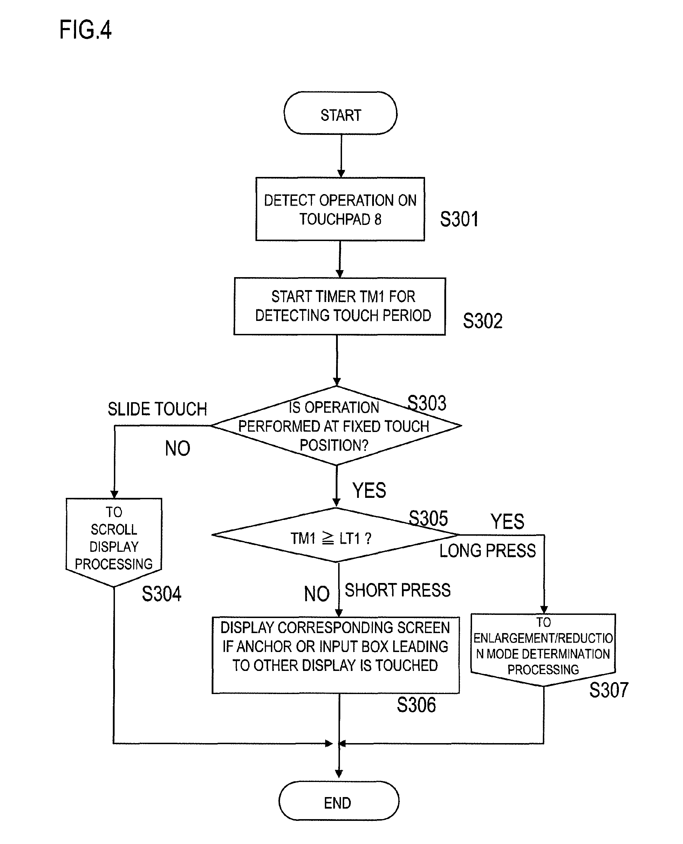

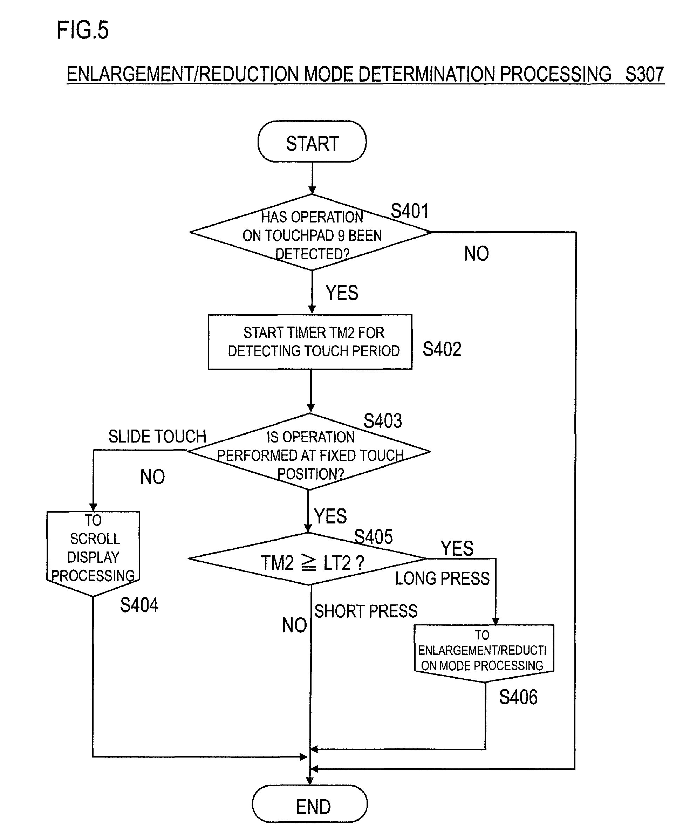

As illustrated in Figs. 4 and 5, the display control unit (11) may switch to the mode (the enlargement/reduction mode) if the first position remains at substantially the same point on the first surface for a predetermined time or more (YES in step S305 in Fig. 4) and if the second position remains at substantially the same point on the second surface for a predetermined time or more (YES in step S405 in Fig. 5).

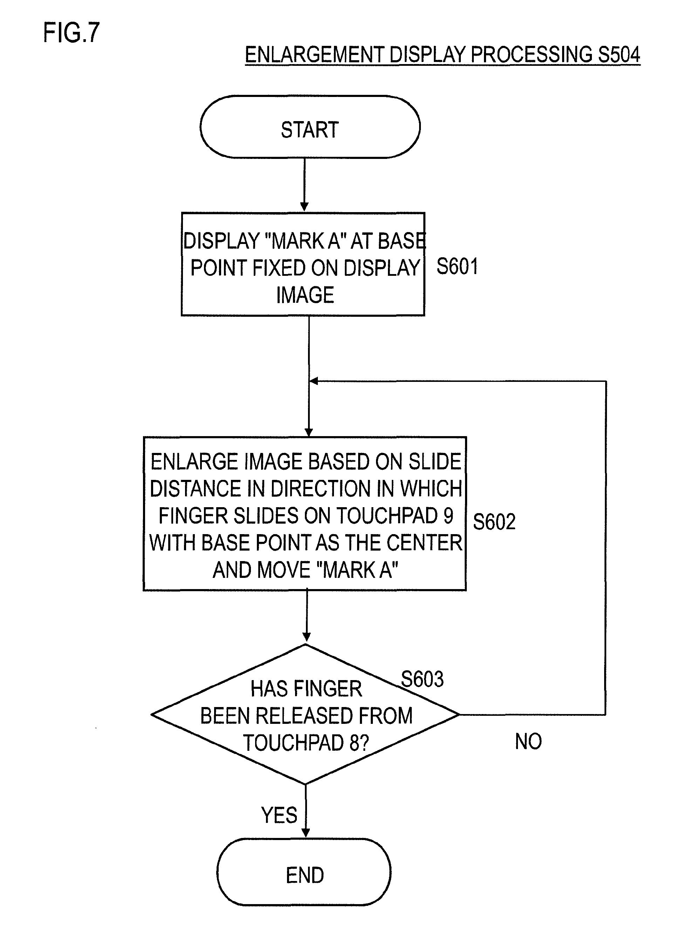

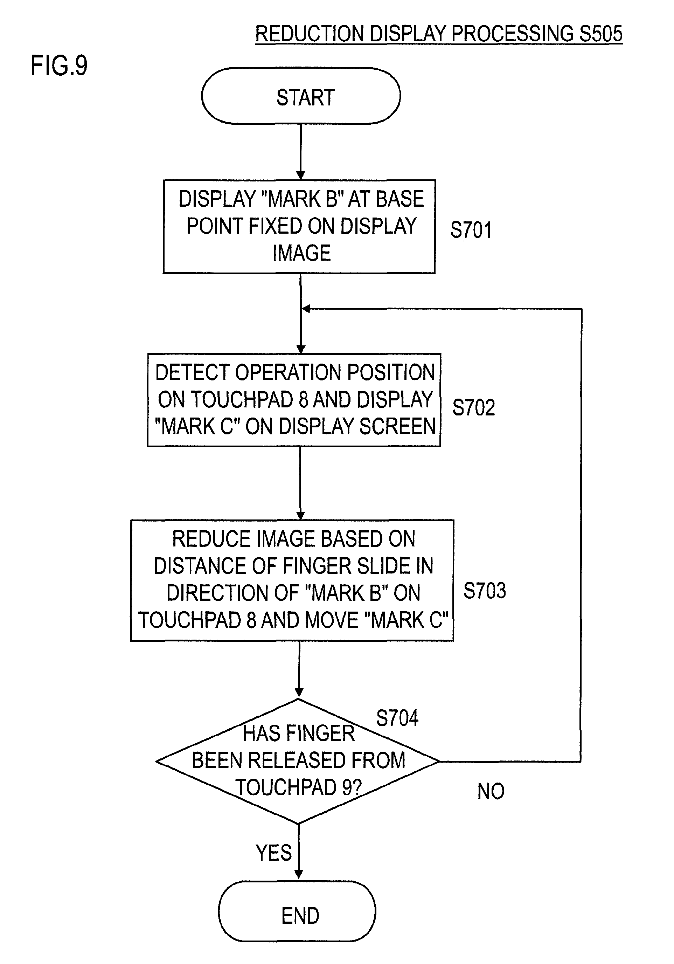

As illustrated in Figs. 7 and 9, after switching to the mode, if the first detection unit (21) and/or the second detection unit (22) no longer detects a contact with or proximity to the object (YES in step S603 in Fig. 7 and YES in step S704 in Fig. 9), the display control unit (11) may switch out of the mode.

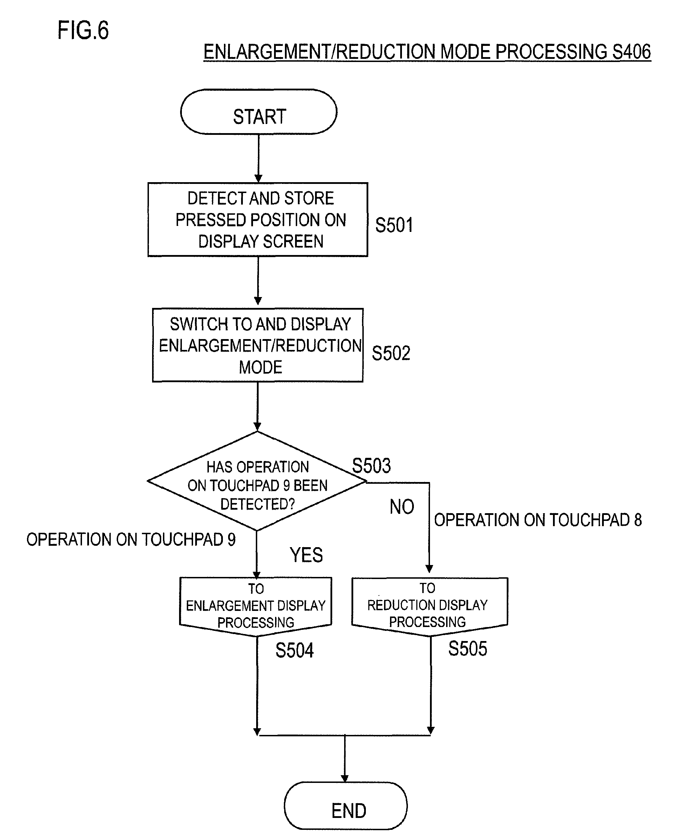

In addition, after switching to the mode, the display control unit (11) may determine whether to instruct the display unit (7) to enlarge or reduce the display content based on a detection result(s) obtained by the first detection unit (21) and/or the second detection unit (22). As illustrated in Fig. 6, after switching the mode, the display control unit (11) may determine (step S503) whether to enlarge (step S504) or reduce (step S505) the display content based on whether movement of the position that is into contact with or is close to an object has been detected by the first detection unit (21) or the second detection unit (22).

In addition, after switching to the mode, the display control unit (11) may determine a direction of enlargement or reduction of the display content based on a detection result(s) obtained by the first detection unit (21) and/or the second detection unit (22).

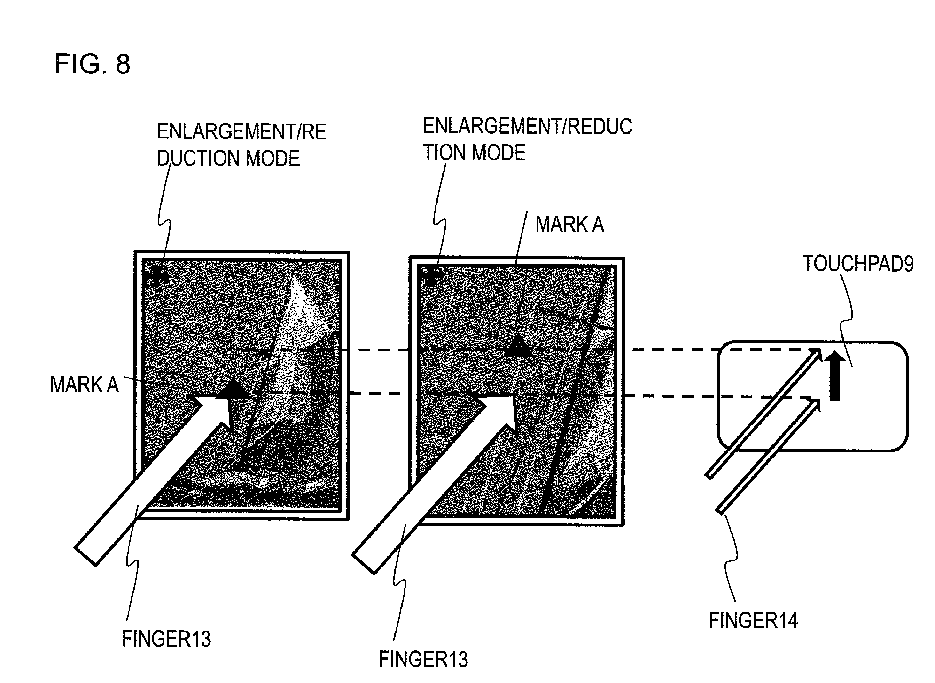

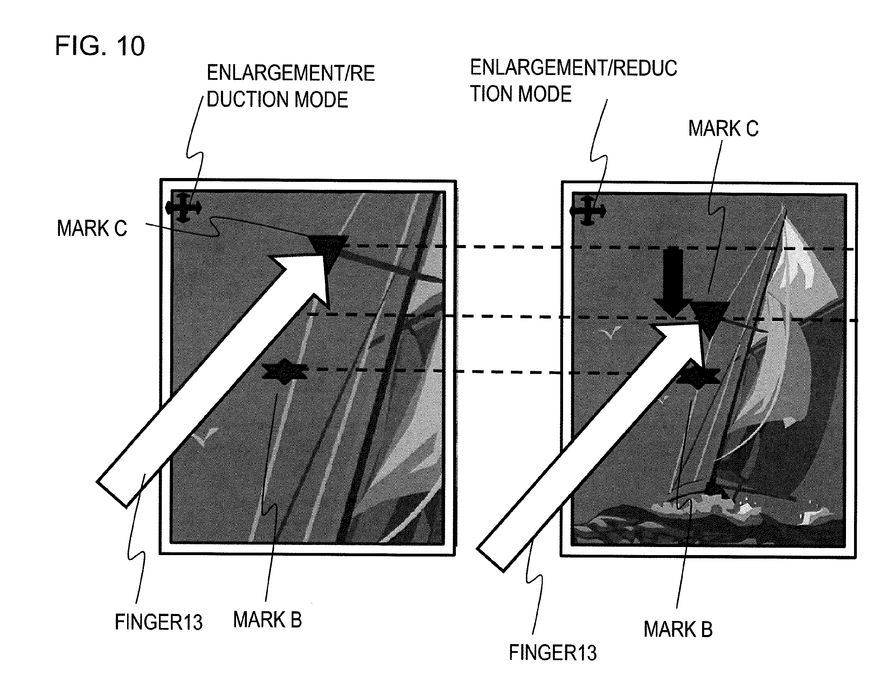

As illustrated in Figs. 8 and 10, when switching to the mode, the display control unit (11) may instruct the display unit (7) to display, along with the display content, a base point (mark A or mark B) used for enlarging or reducing the display content.

As illustrated in Figs. 8 and 10, when switching to the mode (the enlargement/reduction mode), the display control unit (11) may instruct the display unit (7) to display, along with the display content, a symbol (for example, an arrow in a vertical/horizontal direction in Figs. 8 and 10) representing the mode. In addition, when switching out of the mode, the display control unit (11) may instruct the display unit (7) to delete the symbol.

With the portable terminal device according to the present invention, for example, the touchpad (9) is arranged on the surface (bottom surface) opposite to the surface (top surface) on which the touch panel including the touchpad (8 in Fig. 3) and the display unit (7) is arranged. Namely, display content can be enlarged or reduced by operating the touchpads (8 and 9) on both surfaces with two fingers (13 and 14) of one hand. Thus, users can enlarge or reduce display content on the portable terminal device according to the present invention at a desired magnification with one hand.

According to the present invention, the following modes are possible.

### (Mode 1)

A portable terminal device may be the portable terminal device according to the above first aspect.

### (Mode 2)

The display control unit may instruct the display unit to enlarge or reduce the display content, based on a direction and a distance of movement of the first position and/or the second position.

### (Mode 3)

The display control unit may instruct the display unit to enlarge or reduce the display content by using a point that is included in the display content and that corresponds to the first position and/or the second position as a base point.

### (Mode 4)

The first detection unit and/or the second detection unit may detect a distance of movement of the first position and/or the second position at least in a first direction and a second direction. In addition, the display control unit may instruct the display unit to enlarge or reduce the display content in the first direction based on the distance of movement in the first direction and to enlarge or reduce the display content in the second direction based on the distance of movement in the second direction.

### (Mode 5)

The display control unit may switch to a mode for enlarging or reducing the display content based on a detection result(s) obtained by the first detection unit and/or the second detection unit and may switch out of the mode based on a detection result(s) obtained by the first detection unit and/or the second detection unit.

### (Mode 6)

The display control unit may switch to the mode if the first position remains at substantially the same point on the first surface for a predetermined time or more and if the second position remains at substantially the same point on the second surface for a predetermined time or more.

### (Mode 7)

After switching to the mode, if the first detection unit and/or the second detection unit no longer detects a contact with or proximity to the object, the display control unit may switch out of the mode.

### (Mode 8)

After switching to the mode, the display control unit may determine whether to enlarge or reduce the display content based on a detection result(s) obtained by the first detection unit and/or the second detection unit.

### (Mode 9)

After switching to the mode, the display control unit may determine whether to enlarge or reduce the display content based on whether movement of the position that is into contact with or is close to an object has been detected by the first detection unit or the second detection unit.

### (Mode 10)

After switching to the mode, the display control unit may determine a direction of enlargement or reduction of the display content based on a detection result(s) obtained by the first detection unit and/or the second detection unit.

### (Mode 11)

When switching to the mode, the display control unit may instruct the display unit to display, along with the display content, a base point used for enlarging or reducing the display content.

### (Mode 12)

When switching to the mode, the display control unit may instruct the display unit to display, along with the display content, a symbol representing the mode. In addition, when switching out of the mode, the display control unit may instruct the display unit to delete the symbol.

### (Mode 13)

The main body may have the second surface on a side opposite to a side on which the first surface is arranged.

### (Mode 14)

The first detection unit and/or the second detection unit may comprise a touchpad.

### (Mode 15)

The portable terminal device may comprise a touch panel comprising the display unit and the first detection unit.

### (Mode 16)

A display control method may be the display control method according to the above second aspect.

### (Mode 17)

The instructing may comprise instructing the display unit to enlarge or reduce the display content, based on a direction and a distance of movement of the first position and/or the second position.

### (Mode 18)

The instructing may comprise instructing the display unit to enlarge or reduce the display content by using a point that is included in the display content and that corresponds to the first position and/or the second position as a base point.

### (Mode 19)

The detecting the position on the first surface and/or the detecting the position on the second surface may comprise detecting a distance of movement of the first position and/or the second position at least in a first direction and a second direction. The instructing may comprise instructing the display unit to enlarge or reduce the display content in the first direction based on the distance of movement in the first direction and to enlarge or reduce the display content in the second direction based on the distance of movement in the second direction.

### (Mode 20)

A program may be the program according to the above third aspect.

### (Mode 21)

The instructing may comprise instructing the display unit to enlarge or reduce the display content, based on a direction and a distance of movement of the first position and/or the second position.

### (Mode 22)

The instruction may comprise instructing the display unit to enlarge or reduce the display content by using a point that is included in the display content and that corresponds to the first position and/or the second position as a base point.

### (Mode 23)

The detecting the position on the first surface and/or the detecting the position on the second surface may comprise detecting a distance of movement of the first position and/or the second position at least in a first direction and a second direction. The instructing may comprise causing the computer to execute instructing the display unit to enlarge or reduce the display content in the first direction based on the distance of movement in the first direction and to enlarge or reduce the display content in the second direction based on the distance of movement in the second direction.

### (Exemplary Embodiment)

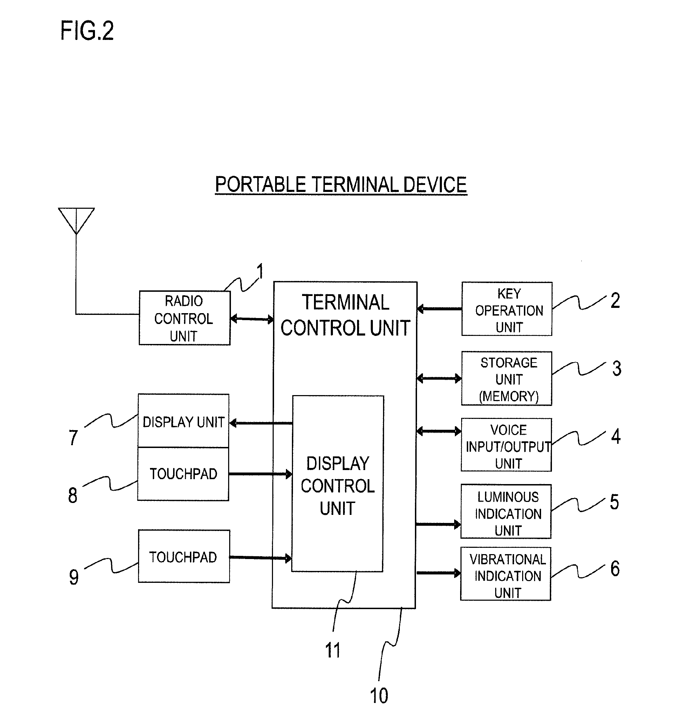

A portable terminal device according to an exemplary embodiment will be described with reference to the drawings. Fig. 2 is a block diagram illustrating a configuration of a portable terminal device according to the present exemplary embodiment. While a portable phone is used as the portable terminal device in the present exemplary embodiment, the portable terminal device according to the present invention is not limited to a portable phone. Namely, the portable terminal device is not limited to a portable phone, a smartphone, etc. Examples of the portable terminal device include other portable electronic devices such as game consoles, tablet PCs (Personal Computers), and laptop PCs.

As illustrated in Fig. 2, the portable terminal device according to the present exemplary embodiment includes a radio control unit 1, a key operation unit 2, a storage unit (memory) 3, a voice input/output unit 4, a luminous indication unit 5, a vibrational indication unit 6, a display unit 7, a touchpad 8, a touchpad 9, and a terminal control unit 10. Hereinafter, a device detecting a position touched by a user with a finger or the like will be referred to as a touchpad, and a device including a combination of a touchpad and a display unit will be referred to as a touch panel. The portable terminal device illustrated in Fig. 2 includes a touch panel including the touchpad 8 and the display unit 7.

The radio control unit 1 performs radio control on the portable phone and exchanges information about radio conditions with the terminal control unit 10. The key operation unit 2 is an input device including a key pad and gives instructions about operations inputted from the user to the terminal. The storage unit 3 includes a storage device storing control information about the portable phone, input information from the user, and information received from the outside, for example. The voice input/output unit 4 is a voice input/output device including a microphone and a speaker, for example. The luminous indication unit 5 indicates a state by turning on a lamp, an LED, or the like. The vibrational indication unit 6 indicates a state by generating a vibration with a vibrator or the like. The display unit 7 is a display device such as a black-and-white or color liquid crystal panel or the like and indicates various states of the portable phone to the user. Since the radio control unit 1, the key operation unit 2, the storage unit 3, the voice input/output unit 4, the luminous indication unit 5, and the vibrational indication unit 6 are known components as units arranged in a portable phone, detailed description of these units will be omitted.

The touchpad 8 is arranged on the front surface of the display unit 7 and detects a touch by a finger or the like of the user on operation information displayed on the display unit 7. The touchpad 9 is arranged on the surface opposite to the display unit 7. As in a touchpad included in a laptop PC for a pointer operation instead of a mouse, the touchpad 9 detects a touch by a finger of the user, to detect the direction and the amount of the movement. These touchpads 8 and 9 are not limited to contact-detection-type touchpads that detect a direct contact with an object. These touchpads 8 and 9 may be proximity-detection-type touchpads that detect proximity to an object.

The terminal control unit 10 controls each of these units to realize a series of operations as a portable phone. The terminal control unit 10 includes a display control unit 11. The display control unit 11 detects control information via the touchpads 8 and 9 and controls display content on the portable terminal device.

Next, an operation of the portable terminal device according to the present exemplary embodiment will be described with reference to Figs. 3 to 10. Fig. 3 illustrates a schematic perspective view of the portable terminal device according to the present exemplary embodiment. As illustrated in Fig. 3, for example, the portable terminal device is a type of mobile phone having the entire front-side surface as a display portion. A user operates the portable terminal device by touching an operation item displayed on the display portion with a finger. Generally, while holding this type of portable terminal device illustrated in Fig. 3 with one hand, a user operates the screen with a thumb. The example illustrated in Fig. 3 assumes that a finger 13 is a thumb and a finger 14 is an index finger. However, the fingers operating the portable terminal device are not limited to a combination of a thumb and an index finger.

Next, an enlargement/reduction display method according to the present exemplary embodiment will be described with reference to drawings. Fig. 4 is a flow chart illustrating an operation of the portable terminal device according to the present exemplary embodiment. As illustrated in Fig. 4, when a user touches the touchpad 8 on the display unit 7 with the finger 13, the touchpad 8 detects the operation of the user (step S301). When the touchpad 8 detects the operation on the screen, the display control unit 11 starts a timer TM1 for determining screen contact period (touch period) (step S302).

Next, the display control unit 11 determines whether the operation is performed at a fixed touch position on the touchpad 8 (step S303). If the operation is not performed at a fixed touch position, namely, if the operation is a slide touch (NO in step S303), since the operation is either a vertical slide operation or a horizontal slide operation, the display control unit 11 causes the display unit 7 to scroll the display screen (step S304).

When the display unit 7 scrolls the display screen, the touchpad 8 detects start and end points of the movement of the finger on the display screen, and the display control unit 11 calculates the amount of the movement on the screen based on the distance between the start and end points. The display control unit 11 causes the display unit 7 to scroll the screen by this amount of the movement. Since scroll display is a known technique, details of the scroll display processing will be omitted.

In contrast, if the operation is performed at a fixed touch position (YES in step S303), the display control unit 11 determines whether the time measured by the timer TM1 reaches a predetermined threshold LT1 or more (step S305). If the time measured by the timer TM1 is less than the threshold LT1(NO in step S305), the display control unit 11 determines that the operation is a short press. If an anchor or an input area (input box) leading to other display exists at the touch position, the display control unit 11 causes the display unit 7 to display a corresponding screen (step S306).

In contrast, if the time measured by the timer TM1 reaches the threshold LT1 or more (YES in step S305), the display control unit 11 determines that the operation is a long press and moves to enlargement/reduction mode determination processing (step S307).

Next, the enlargement/reduction mode determination processing (step S307 in Fig. 4) will be described. Fig. 5 is a flow chart illustrating an operation of the portable terminal device according to the present exemplary embodiment. As illustrated in Fig. 5, first, the display control unit 11 determines whether an operation has been performed on the touchpad 9 arranged on the side opposite to the display screen (step S401). If an operation on the touchpad 9 is not detected (NO in step S401), the display control unit 11 ends the enlargement/reduction mode determination processing.

If an operation on the touchpad 9 is detected (YES in step S401), the display control unit 11 starts a timer TM2 for detecting touch period (step S402). Next, the display control unit 11 determines whether the operation is performed at a fixed touch position on the touchpad 9 (step S403). If the operation is not performed at a fixed touch position (NO in step S403), the display control unit 11 determines that the user is sliding the finger 14 vertically or horizontally, for example. Thus, the display control unit 11 causes the display unit 7 to scroll the display screen (step S404).

If the operation is performed at a fixed touch position (YES in step S403), the display control unit 11 determines whether the time measured by the timer TM2 reaches a predetermined threshold LT2 or more (step S405). If the time measured by the timer TM2 is less than the threshold LT2 (NO in step S405), the display control unit 11 determines that the operation is a short press and ends the enlargement/reduction mode determination processing.

In contrast, if the time measured by the timer TM2 reaches the threshold LT2 or more (YES in step S405), the display control unit 11 determines that the operation is a long press and moves to enlargement/reduction mode processing (step S406).

Next, the enlargement/reduction mode processing (step S406 in Fig. 5) will be described. Fig. 6 is a flow chart illustrating the enlargement/reduction mode processing of the portable terminal device according to the present exemplary embodiment. First, the display control unit 11 stores information about the pressed position (base point) (step S301 in Fig. 4) on the display screen on the touchpad 8 on the display unit 7 (step S501). Next, to switch to the enlargement/reduction mode, the display control unit 11 causes the display unit 7 to display an enlargement/reduction mode and mode type information on the screen (step S502).

Next, the display control unit 11 determines whether an operation on the touchpad 8 or on the touchpad 9 has been detected (step S503). If an operation on the touchpad 9 has been detected (YES in step S503), the display control unit 10 moves to enlargement display processing (step S504).

If an operation on the touchpad 8 has been detected (NO in step S503), the display control unit 11 moves to reduction display processing (step S505).

Next, the enlargement display processing (step S504 in Fig. 6) will be described with reference to the drawings. Fig. 7 is a flow chart illustrating the enlargement display processing of the portable terminal device according to the present exemplary embodiment.

As illustrated in Fig. 7, the display control unit 11 causes the display unit 7 to display mark A at the base point on the display screen detected in step S501 in Fig. 6 (step S601). The base point is the position touched by the finger 13 of the user on the touchpad 8. Initially, the base point and mark A are located at the same position. Next, the display control unit 11 moves mark A on the display screen, based on operation information inputted to the touchpad 9 (for example, by the amount of the movement in the direction of the slide). In addition, the display control unit 11 enlarges the display content on the display screen, based on the distance between the base point and mark A (step S602).

Fig. 8 illustrates the enlargement display processing of the portable terminal device according to the present exemplary embodiment. As illustrated in Fig. 8, if the user slides the finger (index finger) 14 on the touchpad 9 while pressing the finger (thumb) 13 on the touchpad 8 and maintaining the position of the base point, mark A moves based on the slide amount. As a result, based on the amount of the movement of mark A, enlarged display content (the yacht in Fig. 8) on the display screen is displayed.

Referring back to the flow chart in Fig. 7, unless the finger remaining at the base point on the touchpad 8 is released (NO in step S603), repetitive slide operations on the touchpad 9 cause the display control unit 11 to continue the enlargement display processing until an enlargement limit is reached (step S602). If the finger remaining at the base point on the touchpad 8 (YES in step S603) is released, the display control unit 11 ends the enlargement display processing.

Next, the reduction display processing (step S505 in Fig. 6) will be described with reference to the drawings. Fig. 9 is a flow chart illustrating the reduction display processing of the portable terminal device according to the present exemplary embodiment.

As illustrated in Fig. 9, the display control unit 11 causes the display unit 7 to display mark B at the base point on the display screen detected in step S501 in Fig. 6 (step S701). Next, the display control unit 11 detects the operation position on the touchpad 8 and displays mark C on the display screen (step S702). Next, the display control unit 11 moves mark C on the display screen, based on operation information inputted on the touchpad 8 (for example, by the direction of and the amount of the movement). In addition, the display control unit 11 reduces display content on the display screen, based on the distance of the movement of mark C (step S703).

Fig. 10 illustrates the reduction display processing of the portable terminal device according to the present exemplary embodiment. As illustrated in Fig. 10, if the user slides the finger (thumb) 13 on the touchpad 8, mark C moves based on the slide amount. As a result, based on the amount of the movement of mark C, reduced display content (yacht in Fig. 10) on the display screen is displayed.

Referring back to the flow chart in Fig. 9, unless the finger remaining at the base point on the touchpad 9 is released (NO in step S704), repetitive slide operations on the touchpad 8 cause the display control unit 11 to continue the reduction display processing until a reduction limit is reached (step S703). If the finger remaining at the base point on the touchpad 9 is released (YES in step S704), the display control unit 11 ends the reduction display processing.

The portable terminal device according to the present exemplary embodiment includes a touch panel including the touchpad 8 and the display unit 7 on a first surface. In addition, the portable terminal device includes a touchpad 9 on a second surface that is opposite to the first surface. The portable terminal device according to the present exemplary embodiment can provide the following advantageous effects.

First, a first advantageous effect will be described. By arranging the touchpad 9 on the surface opposite to the display screen of the portable terminal device and determining an enlargement/reduction operation based on an operation on the touchpad 8 on the display screen and an operation on the touchpad 9 on the opposite surface, continuous enlargement/reduction display can be performed with one hand. Namely, with the portable terminal device according to the present exemplary embodiment, it is possible to give an instruction for changing display by using the touchpads on both surfaces of the housing. In addition, when operating the portable terminal device from both surfaces of the housing, since a user can hold the portable terminal device with fingers on both operating sides, the user can easily operate the portable terminal device with one hand.

Next, a second advantageous effect will be described. The portable terminal device according to the present exemplary embodiment includes the touchpads 8 and 9 arranged on the display screen and the surface opposite thereto, respectively. Since a mode change to the enlargement/reduction mode is performed based on a long press on the touchpads 8 and 9 at the same timing, display content on the display screen can be enlarged/reduced without affecting existing functions and operations provided with the portable terminal device.

Next, a third advantageous effect will be described. By setting a base point on the display screen and displaying the base point as a mark when a user performs a long press on the touchpads 8 and 9, a user can adjust the enlargement/reduction ratio while using content displayed on the display screen as a mark.

### (Variation)

Variations of the portable terminal device according to the above exemplary embodiment will be described.

The portable terminal device (Fig. 3) according to the above exemplary embodiment includes a touch panel including the touchpad 8 and the display unit 7, and the touchpad 8 is arranged on the display unit 7. In addition, the touchpad 9 is arranged on a surface (bottom surface) opposite to the touchpad 8. However, the touchpad 8 may be arranged at a position or a surface different from that of the display unit 7. In addition, the position of the touchpad 9 is not limited to the surface opposite to the touchpad 8. The touchpad 9 may be provided on any one of the surfaces (side surfaces) adjacent to the surface on which the touchpad 8 is arranged.

In addition, in the above exemplary embodiment, the portable terminal device separately detects a user operation for the enlargement mode and a user operation for the reduction mode (step S503 in Fig. 6). However, alternatively, the enlargement mode and the reduction mode may not be distinguished. Namely, the portable terminal device may adjust the enlargement/reduction ratio based on a slide operation on the touchpad 9 while using the touch position on the touchpad 8 as the base point.

In addition, alternatively, a touchpad (for example, the touchpad 9) that a user touches first may be used for detecting a fixed point (the base point or the center point for an enlargement/reduction operation) and for determining the end of the operation (for example, the operation is ended when the user removes the finger), and the enlargement/reduction operation may be performed based on a finger operation on the touchpad on the opposite side (for example, the touchpad 8).

In addition, the touchpad 8 included in the touch panel generally has approximately the same area as that of the display unit 7. Thus, normally, the touchpad 8 can detect the movement of a user's finger in two directions (for example, XY directions). Thus, if a user specifies enlargement/reduction on the touchpad 8 on the touch panel side, the enlargement/reduction may be performed at a different ratio between in the vertical direction and in the horizontal direction.

There are cases where the touchpad 9 on the back surface has a smaller area than that of the touchpad 8. For example, there are cases where the touchpad 9 on the back surface is a rectangular device detecting a slide operation in one direction. In such cases, the touchpad 9 on the back surface can only detect the movement of a user's finger in one direction. Thus, the enlargement/reduction direction may be changed based on a short press on the touchpad 9 on the back surface (only in the vertical direction, only in the horizontal direction, equal in the vertical and horizontal directions, etc.). In this way, the display content may be enlarged or reduced based on detection of movement in one direction.

An area that is not covered by the touchpad 9 may be arranged on the back surface of the housing. In this way, when not using the enlargement/reduction function according to the present invention, the user can easily hold the device by placing a finger on the area where no touchpad exists.

In addition, the display control unit 11 may cause the display unit 7 to display an enlargement/reduction ratio (for example, in percent). In addition, the display control unit 11 may cause the display unit 7 to display an enlargement direction (vertical, horizontal, equal enlargement). Such display can improve operability for users.

The disclosure of prior art including the above Patent Literatures is incorporated herein by reference thereto. Modifications and adjustments of the exemplary embodiment are possible within the scope of the overall disclosure (including the claims) of the present invention and based on the basic technical concept of the present invention. Various combinations and selections of various disclosed elements (including the elements in each of the claims, the exemplary embodiments, drawings, etc.) are possible within the scope of the claims of the present invention. That is, the present invention of course includes various variations and modifications that could be made by those skilled in the art according to the overall disclosure including the claims and the technical concept.

### REFERENCE SIGNS LIST

- 1: radio control unit
- 2: key operation unit
- 3: storage unit (memory)
- 4: voice input/output unit
- 5: luminous indication unit
- 6: vibrational indication unit
- 7: display unit
- 8, 9: touchpad
- 10: terminal control unit
- 11: display control unit
- 13, 14: finger
- 20: main body
- 21, 22: detection unit

## Claims

1. A portable terminal device, comprising:
a main body that comprises at least a first surface and a second surface;
a display unit that displays display content;
a first detection unit that detects, as a first position, a position on the first surface when an object comes into contact with or comes close to the first surface;
a second detection unit that detects, as a second position, a position on the second surface when an object comes into contact with or comes close to the second surface; and
a display control unit that instructs the display unit to enlarge or reduce the display content based on a detection result(s) obtained by the first detection unit and the second detection unit.

2. The portable terminal device according to claim 1;
wherein the display control unit instructs the display unit to enlarge or reduce the display content, based on a direction and a distance of movement of the first position and/or the second position.

3. The portable terminal device according to claim 1 or 2;
wherein the display control unit instructs the display unit to enlarge or reduce the display content by using a point that is included in the display content and that corresponds to the first position and/or the second position as a base point.

4. The portable terminal device according to any one of claims 1 to 3;
wherein the first detection unit and/or the second detection unit detects a distance of movement of the first position and/or the second position at least in a first direction and a second direction; and
wherein the display control unit instructs the display unit to enlarge or reduce the display content in the first direction based on the distance of movement in the first direction and to enlarge or reduce the display content in the second direction based on the distance of movement in the second direction.

5. The portable terminal device according to any one of claims 1 to 4;
wherein the display control unit switches to a mode for enlarging or reducing the display content based on a detection result(s) obtained by the first detection unit and/or the second detection unit and switches out of the mode based on a detection result(s) obtained by the first detection unit and/or the second detection unit.

6. The portable terminal device according to claim 5;
wherein the display control unit switches to the mode if the first position remains at substantially the same point on the first surface for a predetermined time or more and if the second position remains at substantially the same point on the second surface for a predetermined time or more.

7. The portable terminal device according to claim 5 or 6;
wherein, after switching to the mode, if the first detection unit and/or the second detection unit no longer detects a contact with or proximity to the object, the display control unit switches out of the mode.

8. The portable terminal device according to any one of claims 5 to 7;
wherein after switching to the mode, the display control unit determines whether to instruct the display unit to enlarge or reduce the display content based on a detection result(s) obtained by the first detection unit and/or the second detection unit.

9. The portable terminal device according to any one of claims 5 to 7;
wherein, after switching to the mode, the display control unit determines whether to enlarge or reduce the display content based on whether movement of the position that is into contact with or is close to an object has been detected by the first detection unit or the second detection unit.

10. The portable terminal device according to any one of claims 5 to 9;
wherein, after switching to the mode, the display control unit determines a direction of enlargement or reduction of the display content based on a detection result(s) obtained by the first detection unit and/or the second detection unit.

11. The portable terminal device according to any one of claims 5 to 10;
wherein, when switching to the mode, the display control unit instructs the display unit to display, along with the display content, a base point used for enlarging or reducing the display content.

12. The portable terminal device according to any one of claims 5 to 11;
wherein, when switching to the mode, the display control unit instructs the display unit to display, along with the display content, a symbol representing the mode; and
wherein, when switching out of the mode, the display control unit instructs the display unit to delete the symbol.

13. The portable terminal device according to any one of claims 1 to 12;
wherein the main body has the second surface on a side opposite to a side on which the first surface is arranged.

14. The portable terminal device according to any one of claims 1 to 13;
wherein the first detection unit and/or the second detection unit comprises a touchpad.

15. The portable terminal device according to any one of claims 1 to 14, comprising a touch panel comprising the display unit and the first detection unit.

16. A display control method of a portable terminal device that comprises a main body having at least a first surface and a second surface and a display unit displaying display content, the display control method comprising:
detecting, as a first position, a position on the first surface when an object comes into contact with or comes close to the first surface;
detecting, as a second position, a position on the second surface when an object comes into contact with or comes close to the second surface; and
instructing the display unit to enlarge or reduce the display content based on a detection result(s) obtained on the first surface and the second surface.

17. The display control method according to claim 16;
wherein the instructing comprises instructing the display unit to enlarge or reduce the display content, based on a direction and a distance of movement of the first position and/or the second position.

18. The display control method according to claim 16 or 17;
wherein the instructing comprises instructing the display unit to enlarge or reduce the display content by using a point that is included in the display content and that corresponds to the first position and/or the second position as a base point.

19. The display control method according to any one of claims 16 to 18;
wherein the detecting the position on the first surface and/or the detecting the position on the second surface comprises detecting a distance of movement of the first position and/or the second position at least in a first direction and a second direction; and
wherein the instructing comprises instructing the display unit to enlarge or reduce the display content in the first direction based on the distance of movement in the first direction and to enlarge or reduce the display content in the second direction based on the distance of movement in the second direction.

20. A program for display control of a portable terminal device that comprises a main body having at least a first surface and a second surface and a display unit displaying display content, the program causing a computer provided for the portable terminal to execute:
detecting, as a first position, a position on the first surface when an object comes into contact with or comes close to the first surface;
detecting, as a second position, a position on the second surface when an object comes into contact with or comes close to the second surface; and
instructing the display unit to enlarge or reduce the display content based on a detection result(s) obtained on the first surface and the second surface.

21. The program according to claim 20;
wherein the instructing comprises causing the computer to execute instructing the display unit to enlarge or reduce the display content, based on a direction and a distance of movement of the first position and/or the second position.

22. The program according to claim 20 or 21;
wherein the instructing comprises causing the computer to execute instructing the display unit to enlarge or reduce the display content by using a point that is included in the display content and that corresponds to the first position and/or the second position as a base point.

23. The program according to any one of claims 20 to 22;
wherein the detecting the position on the first surface and/or the detecting the position on the second surface comprises detecting a distance of movement of the first position and/or the second position at least in a first direction and a second direction; and
wherein the instructing comprises causing the computer to execute instructing the display unit to enlarge or reduce the display content in the first direction based on the distance of movement in the first direction and to enlarge or reduce the display content in the second direction based on the distance of movement in the second direction.
